# EUROPEAN PATENT APPLICATION

(11) **EP 3 494 845 A1**
(43) Date of publication of application: **12.06.2019**
(21) Application number: 17837011.0
(22) Date of filing: 02.08.2017
(51) Int. Cl.: A47J 36/04, A47G 19/00, A47J 27/00, B29C 45/00, B65D 1/26, C08K 3/34, C08L 67/00, F24C 15/16

(54) **OVENWARE, METHOD FOR PRODUCING OVENWARE, AND RESIN COMPOSITION FOR MOLDING OVENWARE**

(30) Priority: 04.08.2016 JP 2016153716
(71) Applicant: Sumitomo Chemical Company Limited, Tokyo 104-8260 (JP)
(72) Inventor: SAITO, Shintaro, Ibaraki 3003294 (JP)
(74) Representative: Vossius & Partner Patentanwälte Rechtsanwälte mbB
(86) International application number: PCT/JP2017/028021
(87) International publication number: WO 2018/025909

(57) **Abstract**

An ovenware has a container portion, and a handle portion connected to the container portion, in which the ovenware is a molded article of a resin composition containing a liquid crystalline polyester resin and a talc filler, a deflection temperature under load of the resin composition is 270°C or higher, an internal volume of the ovenware is 500 mL or more and 6 L or less, and a thickness of the container portion is 0.3 mm or more and 5 mm or less.

## Description

### Technical Field

The present invention relates to an ovenware, a method for producing an ovenware, and a resin composition for molding an ovenware.

Priority is claimed based on Japanese Patent Application No. 2016-153716 filed in Japan on August 4, 2016, the contents of which are hereby incorporated by reference.

### Background Art

With regard to ovenware, which are cooking and heating containers for oven ranges using an oven heating method, there is a demand for various characteristics such as excellent heat resistance, mechanical strength, and a good appearance.

As materials having excellent heat resistance, polyester resins are given. Among these, a wholly aromatic polyester resin (may be referred to below as "liquid crystalline polyester" or "liquid crystalline polyester resin") has various excellent properties based on the structure thereof, particularly in respect of heat resistance. For this reason, the resin is adopted as a material of ovenware exposed to high temperatures. For example, PTLs 1 and 2 disclose ovenware using wholly aromatic polyester resins.

### Citation List

### Patent Literature

[PTL 1] Japanese Unexamined Patent Application, First Publication No. H4-248868
[PTL 2] Japanese Unexamined Patent Application, First Publication No. H3-265650

### Summary of Invention

### Technical Problem

When the size of the ovenware becomes large, there are problems in that deformation may occur when used at high temperatures and the molded article may be broken when dropped. On the other hand, even in general households, there is a need for ovenware which is excellent in heat resistance and which is able to be used for high temperature cooking.

The present invention was made in view of the above circumstances, and an object thereof is to provide a large ovenware excellent in heat resistance, a method for producing the ovenware, and a resin composition for molding an ovenware which is able to be suitably used for the ovenware.

### Solution to Problem

The present invention encompasses the following inventions [1] to [7].
[1] An ovenware including a container portion; and a handle portion connected to the container portion, in which the ovenware is a molded article of a resin composition containing a liquid crystalline polyester resin and a talc filler, a deflection temperature under load of the resin composition is 270°C or higher, an internal volume of the ovenware is 500 mL or more and 6 L or less, and a thickness of the container portion is 0.3 mm or more and 5 mm or less.
[2] The ovenware according to [1], in which an amount of the talc filler is 55 parts by mass or more and 100 parts by mass or less with respect to 100 parts by mass of the liquid crystalline polyester resin.
[3] The ovenware according to [1] or [2], in which an average particle size of the talc filler is 5 µm or more and 30 µm or less.
[4] The ovenware according to any one of [1] to [3], in which the resin composition contains a titanium oxide filler, and a filling amount of the titanium oxide filler is 1 part by mass or more and 15 parts by mass or less with respect to 100 parts by mass of the liquid crystalline polyester resin.
[5] The ovenware according to any one of [1] to [4], in which the resin composition is a liquid crystalline polyester resin composition with a bending strength of 20 MPa or more as measured at 250°C in accordance with ASTM D790.
[6] A method for producing the ovenware according to any one of [1] to [5], in which producing is carried out by an injection molding method.
[7] A resin composition for molding an ovenware containing a liquid crystalline polyester resin, a talc filler, and a titanium oxide filler.

### Advantageous Effects of Invention

According to the present invention, it is possible to provide a large ovenware excellent in heat resistance, a method for producing an ovenware, and a resin composition for molding an ovenware which is able to be suitably used for the ovenware.

### Brief Description of Drawings

FIG. 1 is a schematic cross-sectional view of an example of an ovenware in an aspect of the present invention.
FIG. 2 is a perspective view representing an overall shape of an example of an ovenware in an aspect of the present invention.

### Description of Embodiments

### <Ovenware>

A description will be given of an ovenware according to the first aspect of the present invention.

The ovenware in an aspect of the present invention is molded using a resin composition containing a liquid crystalline polyester resin and a talc filler.

The ovenware in an aspect of the present invention is a large ovenware which is able to cook dishes for a large number of people at once.

An ovenware in an aspect of the present invention has an internal volume of 500 mL or more and 6 L or less. In an aspect of the present invention, the "internal volume of the ovenware" means the maximum amount of water which is able to be placed in the ovenware under conditions of a temperature of 25°C.

In an aspect of the present invention, the internal volume of the ovenware is preferably 1 L or more and 6 L or less, and more preferably 2 L or more and 6 L or less.

Ovenware means cooking and heating containers for oven ranges and there are various variations in the sizes and shapes thereof depending on the cooking application.

In the case of a large ovenware, deformation when used at high temperatures and cracking upon being dropped due to insufficient strength may occur. In the case of a small ovenware, these problems are unlikely to occur, but, in the case of a large ovenware, the problems become remarkable.

In the ovenware in an aspect of the present invention, the upper limit value of the size (also referred to as internal volume) is 6 L, which is the maximum size which is able to be used for ordinary household ovens. Since the ovenware in an aspect of the present invention is molded using the resin composition of the present embodiment, it is possible to have sufficient strength even in the case of a large ovenware.

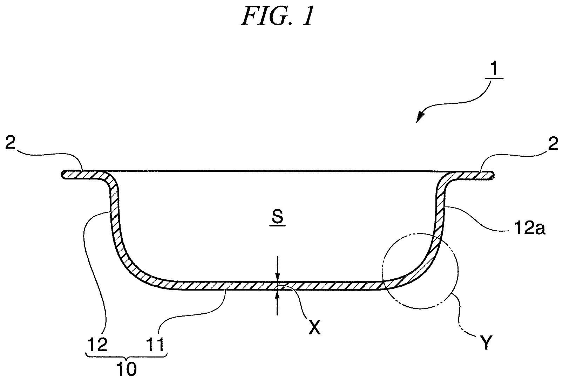

FIG. 1 shows a schematic cross-sectional view of ovenware 1 in an aspect of the present invention. As shown in FIG. 1, the ovenware 1 according to an aspect of the present invention has a handle portion 2 and a container portion 10.

The container portion 10 has a space S to accommodate foodstuffs and the like to be cooked during use. The container portion 10 has a bottom portion 11 and a side wall 12 provided in a closed ring shape in a plan view in a peripheral portion of the bottom portion 11. The space S is a space surrounded by the bottom portion 11 and the side wall 12. The container portion 10 is preferably a wide-mouthed container which is entirely open upward in the vertical direction from the horizontal surface of the bottom portion 11. "Horizontal surface of the bottom portion" means the surface which is substantially horizontal in the inner surface (that is, the interface with the space S) of the bottom portion when the ovenware formed of the container portion and the handle portion according to an aspect of the present invention is placed on a horizontal surface. "Substantially horizontal" means that the surface may partially have a gradient of a maximum of -40% to +40% with respect to the horizontal surface.

In the ovenware 1 in an aspect of the present invention, the "internal volume" means the maximum amount of water which is able to be placed in the space S at a temperature of 25°C.

The handle portion 2 may be provided in a part of the container portion 10 or may be provided in a peripheral portion.

The handle portion 2 is a structure portion for the user to hold mainly when carrying the ovenware 1. The handle portion 2 is provided on an outer wall 12a of a side wall 12 so as to protrude from the outer wall 12a in a plan view to the opposite side to the space S side. The handle portion 2 may be provided on the upper end portion of the side wall 12 (that is, the opposite side to the bottom portion 11), or may be provided in the central portion between the upper end portion of the side wall 12 and the bottom portion 11.

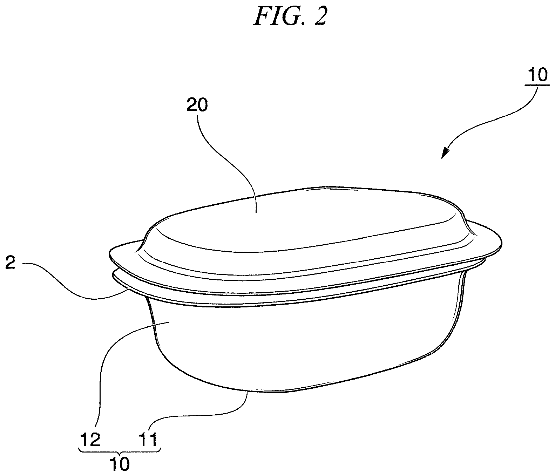

In addition, as shown in FIG. 2, the ovenware of the present invention may also have a detachable lid portion 20. The shape of the lid portion 20 is not particularly limited, but the lid portion 20 preferably has a shape which is able to be placed on and removed from the upper portion of the handle portion 2.

In an aspect of the present invention, the height of the ovenware formed of the container portion and the handle portion is preferably 1 cm or more and 30 cm or less, and more preferably 3 cm or more and 20 cm or less.

In an aspect of the present invention, the lateral width of the ovenware formed of the container portion and the handle portion is preferably 5 cm or more and 50 cm or less, and more preferably 10 cm or more and 40 cm or less.

In an aspect of the present invention, the depth of the ovenware formed of the container portion and the handle portion is preferably 5 cm or more and 50 cm or less, and more preferably 10 cm or more and 40 cm or less.

In a case where the ovenware of the present invention also has the lid portion 20, the height, the lateral width, and the depth are preferably in the above ranges when the lid portion 20 is placed on the container portion 10.

Here, "the height of the ovenware formed of the container portion and the handle portion" means the shortest distance to the top portion of the ovenware formed of the container portion and the handle portion from the upper surface of the horizontal surface when the ovenware formed of the container portion and the handle portion in the present invention is placed on a horizontal surface.

"The lateral width of the ovenware formed of the container portion and the handle portion" means the maximum length of the ovenware in the horizontal direction when the ovenware formed of the container portion and the handle portion in the present invention is placed on a horizontal surface.

"The depth of the ovenware formed of the container portion and the handle portion" means the maximum length in the horizontal direction orthogonal to the direction of the lateral width when the ovenware formed of the container portion and the handle portion in the present invention is placed on a horizontal surface.

In an aspect of the present invention, the thickness of the container portion of the ovenware 1 is 0.3 mm or more and 5 mm or less, and more preferably 1 mm or more and 4 mm or less. The thickness of the container portion of the ovenware 1 is the thickness indicated by X in FIG. 1 and means the thinnest thickness at the measurement point.

As another aspect, "the thickness of the container portion of the ovenware" means the shortest distance from the surface (that is, the inner wall of the ovenware) in contact with the space containing the foodstuff or the like at an arbitrary position of the container portion of the ovenware to the surface (that is, the outer wall of the ovenware) of the opposite side to the surface in contact with the space.

It is possible to measure the thickness of the container portion of the ovenware using, for example, a micrometer.

The shape of the ovenware 1 according to an aspect of the present invention is not particularly limited and it is possible to appropriately select a rectangular parallelepiped, a cube, an oval shape, a shape with a curved boundary between a bottom portion and a side wall as shown in a region Y surrounded by a two-dot chain line in FIG. 1, or the like.

Among these, the oval shape and the shape with a curved boundary between a bottom portion and a side wall as shown in a region Y surrounded by a two-dot chain line in FIG. 1, and the like are preferable since the inner wall of the ovenware 1 is easily cleaned, there are no corners at the outer wall of the ovenware, and it possible to favorably preserve the strength thereof.

When the ovenware 1 containing foodstuffs or the like to be cooked in the container portion 10 at the time of use is taken out from the oven, there is a concern that the handle portion 2 may become deformed due to the weight of the foodstuff or the like. Therefore, from the viewpoint of improving the strength, the thickness of the handle portion 2 of the ovenware 1 may be thicker than the thickness of the container portion 10. It is possible to measure the thickness of the handle portion of the ovenware using, for example, a micrometer.

### (Resin Composition)

An ovenware according to an aspect of the present invention is an ovenware molded from a resin composition containing a liquid crystalline polyester resin and a talc filler. That is, the ovenware according to an aspect of the present invention is a molded article of a resin composition containing a liquid crystalline polyester resin and a talc filler.

In an aspect of the present invention, the deflection temperature under load of the resin composition is 270°C or higher. The deflection temperature under load is a value measured, for example, by the test method set out in "ASTM D648". Specifically, when a specific bending stress is applied to the sample and the temperature is raised at a rate of 2°C/min, the temperature at which the amount of bending of the sample reaches a specified deflection amount of 0.25 mm is set as the deflection temperature under load. In the present invention, it is preferable to adopt a resin composition having a deflection temperature under load of 300°C or higher. Adopting the resin composition makes it possible to manufacture an ovenware excellent in heat resistance which is not deformed even in a case of being used in an oven range at a high temperature of, for example, 250°C or higher. The deflection temperature under load of the resin composition is usually 350°C or lower.

### (Liquid Crystalline Polyester Resin)

The liquid crystalline polyester resin (may be referred to below as "liquid crystalline polyester") used in the ovenware of the present invention is a resin having a repeating unit derived from an aromatic hydroxycarboxylic acid as a mesogenic group. Here, "hydroxycarboxylic acid" means a compound having both a hydroxy group (-OH) and a carboxy group (-C(=O)-OH) in one molecule.

The liquid crystalline polyester is a liquid crystalline polyester exhibiting a liquid crystalline property in a molten state, and is preferably melted at a temperature of 250°C or higher and 450°C or lower. The liquid crystalline polyester is preferably a wholly aromatic liquid crystalline polyester obtained using only an aromatic compound as a raw material monomer.

Examples of the liquid crystalline polyester include a liquid crystalline polyester in which an aromatic hydroxycarboxylic acid, an aromatic dicarboxylic acid, and at least one compound selected from the group consisting of an aromatic diol, an aromatic hydroxyamine, and an aromatic diamine are polymerized (that is, polycondensation), a liquid crystalline polyester in which a plurality of types of aromatic hydroxycarboxylic acid are polymerized, and a liquid crystalline polyester in which a polyester such as polyethylene terephthalate and an aromatic hydroxycarboxylic acid are polymerized, and the like. Here, the aromatic hydroxycarboxylic acid, the aromatic dicarboxylic acid, the aromatic diol, the aromatic hydroxyamine, and the aromatic diamine may be polymerizable derivatives in place of a part or all thereof, independently of each other.

Examples of polymerizable derivatives of a compound having a carboxy group such as an aromatic hydroxycarboxylic acid and an aromatic dicarboxylic acid include a derivative (also referred to as an ester) obtained by converting a carboxy group into an alkoxycarbonyl group or an aryloxycarbonyl group, a derivative (also referred to as an acid halide) obtained by converting a carboxy group into a haloformyl group, and a derivative (also referred to as an acid anhydride) obtained by converting a carboxy group into an acyloxycarbonyl group.

Examples of polymerizable derivatives of compounds having a hydroxy group such as an aromatic hydroxycarboxylic acid, an aromatic diol, and an aromatic hydroxyamine include derivatives obtained by converting a hydroxy group into an acyloxyl group by acylation (also referred to as an acylated compound).

Examples of the polymerizable derivative of a compound having an amino group such as an aromatic hydroxyamine and an aromatic diamine include a derivative (also referred to as an acylated compound) obtained by converting an amino group into an acylamino group by acylation.

The liquid crystalline polyester preferably has at least one repeating unit represented by Formula (1) (may be referred to below as "repeating unit (1)"). The repeating unit (1) corresponds to the mesogenic group described above.

(1) -O-Ar¹-CO-

[in Formula (1), Ar¹ represents a phenylene group, a naphthylene group, or a biphenylylene group, and at least one hydrogen atom in the group represented by Ar¹ may each independently be substituted with a halogen atom, an alkyl group having 1 to 10 carbon atoms, or an aryl group having 6 to 20 carbon atoms.)

Examples of the halogen atom which is able to be substituted with at least one hydrogen atoms in the group represented by Ar¹ include a fluorine atom, a chlorine atom, a bromine atom, and an iodine atom.

Examples of the alkyl group having 1 to 10 carbon atoms which is able to be substituted with at least one hydrogen atom in the group represented by Ar¹ include a methyl group, an ethyl group, an n-propyl group, an isopropyl group, an n-butyl group, an isobutyl group, a sec-butyl group, a tert-butyl group, an n-hexyl group, an n-heptyl group, a 2-ethylhexyl group, an n-octyl group, a n-nonyl group, an n-decyl group, and the like.

Examples of the aryl group having 6 to 20 carbon atoms which is able to be substituted with at least one hydrogen atom in the group represented by Ar¹ include monocyclic aromatic groups such as a phenyl group, an o-tolyl group, an m-tolyl group, and a p-tolyl group; and condensed aromatic groups such as a 1-naphthyl group and a 2-naphthyl group.

In a case where at least one hydrogen atom in the group represented by Ar¹ is substituted with any of these groups, the number of substitutions is preferably 1 or 2, and more preferably 1.

The repeating unit (1) is a repeating unit derived from an aromatic hydroxycarboxylic acid.

As the repeating unit (1), a repeating unit in which Ar¹ is a 1,4-phenylene group (for example, a repeating unit derived from 4-hydroxybenzoic acid) and a repeating unit in which Ar¹ is a 2,6-naphthylene group (for example, a repeating unit derived from 6-hydroxy-2-naphthoic acid) are preferable.

That is, examples of the liquid crystalline polyester preferably include a liquid crystalline polyester having at least one repeating unit of a repeating unit derived from 4-hydroxybenzoic acid (also referred to as parahydroxybenzoic acid) and a repeating unit derived from 6-hydroxy-2-naphthoic acid, and more preferably a liquid crystalline polyester having a repeating unit derived from 4-hydroxybenzoic acid.

As another aspect, the liquid crystalline polyester is preferably a liquid crystalline polyester having at least one repeating unit represented by Formula (2) below (may be referred to below as "repeating unit (2)"), and at least one repeating unit represented by Formula (3) below (may be referred to below as "repeating unit (3)"), and more preferably a liquid crystalline polyester having a repeating unit (1), a repeating unit (2), and a repeating unit (3). The liquid crystalline polyester may include a plurality of types of each of the repeating unit (2) and the repeating unit (3). The repeating unit (1) preferably has at least one of a repeating unit in which Ar¹ is a 1,4-phenylene group and a repeating unit in which Ar¹ is a 2,6-naphthylene group.

(2) -CO-Ar²-CO-

(3) -X-Ar³-Y-

[in Formulas (2) and (3), Ar² and Ar³ each independently represent a phenylene group, a naphthylene group, a biphenylylene group, or a group represented by Formula (4); X and Y each independently represent an oxygen atom or an imino group (-NH-); at least one hydrogen atom in the group represented by Ar² or Ar¹ may each independently be substituted with a halogen atom, an alkyl group having 1 to 10 carbon atoms, or an aryl group having 6 to 20 carbon atoms.]

(4) -Ar⁴-Z-Ar⁵-

[in Formula (4), Ar⁴ and Ar⁵ independently represent a phenylene group or a naphthylene group; and Z represents an oxygen atom, a sulfur atom, a carbonyl group, a sulfonyl group, or an alkylidene group having 1 to 10 carbon atoms.]

The halogen atom, alkyl group having 1 to 10 carbon atoms and aryl group having 6 to 20 carbon atoms which are able to be substituted with at least one hydrogen atom in the groups represented by Ar² or Ar³ are the same as the halogen atom, the alkyl group having 1 to 10 carbon atoms, and the aryl group having 6 to 20 carbon atoms, which are able to be substituted with at least one hydrogen atom in the group represented by Ar¹.

In a case where at least one hydrogen atom in the group represented by Ar² or Ar³ is substituted with any of these groups, the number of substitutions is preferably each independently 1 or 2 for each of the groups represented by Ar² or Ar³, and more preferably 1.

Examples of the alkylidene group having 1 to 10 carbon atoms represented by Z include a methylene group, an ethylidene group, an isopropylidene group, an n-butylidene group, a 2-ethylhexylidene group, and the like.

The repeating unit (2) is a repeating unit derived from an aromatic dicarboxylic acid.

Preferably examples of the repeating unit (2) include a repeating unit in which Ar² is 1,4-phenylene group (for example, a repeating unit derived from terephthalic acid), a repeating unit in which Ar² is a 1,3-phenylene group (for example, a repeating unit derived from isophthalic acid), a repeating unit in which Ar² is a 2,6-naphthylene group (for example, a repeating unit derived from 2,6-naphthalenedicarboxylic acid), a repeating unit in which Ar² is a 4,4'-biphenylylene group (for example, a repeating unit derived from 4,4'-dicarboxybiphenyl), or a repeating unit in which Ar² is a diphenyl ether-4,4'-diyl group (for example, a repeating unit derived from 4,4'-dicarboxydiphenyl ether), and a repeating unit in which Ar² is a 1,4-phenylene group, a 1,3-phenylene group, a 2,6-naphthylene group, or a 4,4'-biphenylylene group is more preferable.

The repeating unit (3) is a repeating unit derived from at least one type of compound selected from the group consisting of aromatic diols, aromatic hydroxylamines, and aromatic diamines.

Examples of the repeating unit (3) include a repeating unit in which Ar³ is a 1,4-phenylene group (for example, a repeating unit derived from hydroquinone, p-aminophenol, or p-phenylenediamine), a repeating unit in which Ar³ is a 1,3-phenylene group (for example, a repeating unit derived from 1,3-benzenediol, m-aminophenol (for example, 3-acetoxyaminophenol) or m-phenylenediamine), a repeating unit in which Ar³ is a 2,6-naphthylene group (for example, a repeating unit derived from 2,6-dihydroxynaphthalene, a repeating unit derived from 2-hydroxy-6-aminonaphthalene, or a repeating unit derived from 2,6-diaminonaphthalene), a repeating unit in which Ar³ is a 4,4'-biphenylylene group (for example, a repeating unit derived from 4,4'-dihydroxybiphenyl, 4-amino-4'-hydroxybiphenyl, or 4,4'-diaminobiphenyl), or a repeating unit in which Ar³ is a diphenyl ether-4,4'-diyl group (for example, a repeating unit derived from 4,4'-dihydroxydiphenyl ether, a repeating unit derived from 4-hydroxy-4'-aminodiphenyl ether, or a repeating unit derived from 4,4'-diaminodiphenyl ether), and the like. As the preferable repeating unit (3), a repeating unit in which Ar³ is a 1,4-phenylene group, a 1,3-phenylene group, a 2,6-naphthylene group, or a 4,4'-biphenylylene group is more preferable.

The liquid crystalline polyester preferably has a repeating unit in which X and Y are each an oxygen atom as the repeating unit (3), that is, has a repeating unit derived from an aromatic diol, and more preferably has only a repeating unit in which X and Y are each an oxygen atom as the repeating unit (3).

That is, the liquid crystalline polyester more preferably has a repeating unit represented by Formula (21) (may be referred to below as "repeating unit (21)") and a repeating unit represented by Formula (31) (may be referred to below as "repeating unit (31)"), and even more preferably has a repeating unit (1) (preferably a repeating unit in which Ar¹ is a 1,4-phenylene group or a 2,6-naphthylene group), a repeating unit (21), and a repeating unit (31).

(21) -CO-Ar²¹-CO-

(31) -O-Ar³¹-O-

[in Formulas (21) and (31), Ar²¹ and Ar³¹ each independently represent a 1,4-phenylene group, a 1,3-phenylene group, a 2,6-naphthylene group, or a 4,4'-biphenylylene group; at least one hydrogen atom in the group represented by Ar²¹ or Ar³¹ is independently substituted with a halogen atom, an alkyl group having 1 to 10 carbon atoms, or an aryl group having 6 to 20 carbon atoms.]

The content rate of the repeating unit (1) is preferably 30 mol% or more when the total of the repeating units forming the liquid crystalline polyester according to the present invention is 100 mol%, more preferably 40 mol% or more and 80 mol% or less, even more preferably 50 mol% or more and 70 mol% or less, and particularly preferably 55 mol% or more and 70 mol% or less. In a case where the repeating unit (1) is derived from two or more types of compounds, the amount of the total repeating units (1) is in the above range.

As another aspect, the content rate of the repeating unit (1) in the liquid crystalline polyester is preferably 30 mol% or more when the total of the repeating unit (1), the repeating unit (2), and the repeating unit (3) is 100 mol%, more preferably 40 mol% or more and 80 mol% or less, even more preferably 50 mol% or more and 70 mol% or less, and particularly preferably 55 mol% or more and 70 mol% or less.

In addition, in a case where the repeating unit (1) in the liquid crystalline polyester is a repeating unit derived from parahydroxybenzoic acid, the content rate of the repeating unit derived from parahydroxybenzoic acid is preferably 40 mol% or more when the total of all the repeating units forming the liquid crystalline polyester according to the present invention is 100 mol%, more preferably 45 mol% or more and 80 mol% or less, even more preferably 50 mol% or more and 70 mol% or less, and particularly preferably 55 mol% or more and 65 mol% or less.

The content rate of the repeating unit derived from parahydroxybenzoic acid is preferably 40 mol% or more when the total of the repeating unit (1), the repeating unit (2), and the repeating unit (3) is 100 mol%, more preferably 45 mol% or more and 80 mol% or less, even more preferably 50 mol% or more and 70 mol% or less, and particularly preferably 55 mol% or more and 65 mol% or less.

When the content rate of the repeating unit (1) is in the above range, the processing temperature does not easily become high, thus, appearance defects do not easily occur, which is preferable.

The content rate of the repeating unit (2) of the liquid crystalline polyester is preferably 35 mol% or less when the total of all the repeating units forming the liquid crystalline polyester according to the present invention is 100 mol%, more preferably 10 mol% or more and 35 mol% or less, even more preferably 15 mol% or more and 30 mol% or less, particularly preferably 17.5 mol% or more and 27.5 mol% or less, and most preferably 17.5 mol% or more and 25 mol% or less. In a case where the repeating unit (2) is derived from two or more types of compounds, the amount of all the repeating units (2) is in the above range.

The content rate of the repeating unit (2) of the liquid crystalline polyester is preferably 35 mol% or less when the total of the repeating unit (1), the repeating unit (2) and the repeating unit (3) is 100 mol%, more preferably 10 mol% or more and 35 mol% or less, even more preferably 15 mol% or more and 30 mol% or less, particularly preferably 17.5 mol% or more and 27.5 mol% or less, and most preferably 17.5 mol% or more and 25 mol% or less.

In a case where the repeating unit (2) in the liquid crystalline polyester is a repeating unit derived from terephthalic acid, the content rate of the repeating unit derived from terephthalic acid is preferably 35 mol% or less, when the total of all the repeating units forming the liquid crystalline polyester according to the present invention is 100 mol%, more preferably 10 mol% or more and 35 mol% or less, even more preferably 10 mol% or more and 20 mol% or less, and particularly preferably 11 mol% or more and 18 mol% or less.

As another aspect, the content rate of the repeating unit derived from terephthalic acid is preferably 35 mol% or less with respect to the total of the repeating unit (1), the repeating unit (2), and the repeating unit (3), more preferably 10 mol% or more and 35 mol% or less, even more preferably 10 mol% or more and 20 mol% or less, and particularly preferably 11 mol% or more and 18 mol% or less.

When the content rate of the repeating unit (2) is in the above range, it is possible to impart sufficient heat resistance to the molded ovenware and to increase the strength when used in an oven.

The content rate of the repeating unit (3) in the liquid crystalline polyester is preferably 35 mol% or less when the total of all the repeating units forming the liquid crystalline polyester is 100 mol%, more preferably 10 mol% or more and 35 mol% or less, even more preferably 15 mol% or more and 30 mol% or less, and particularly preferably 17.5 mol% or more and 27.5 mol% or less.

As another aspect, the content rate of the repeating unit (3) in the liquid crystalline polyester is preferably 35 mol% or more when the total of the repeating unit (1), the repeating unit (2), and the repeating unit (3) is 100 mol%, more preferably 10 mol% or more and 35 mol% or less, even more preferably 15 mol% or more and 30 mol% or less, and particularly preferably 17.5 mol% or more and 27.5 mol% or less.

The liquid crystalline polyester may have at least two types of repeating units (1) to (3) independently of each other. In addition, the liquid crystalline polyester may have a repeating unit other than the repeating units (1) to (3), but the content rate thereof is preferably 0.01 mol% or more and 10 mol% or less when the total of all of the repeating units is 100 mol%, and more preferably 0.01 mol% or more and 5 mol% or less.

The amount of the liquid crystalline polyester resin included in the resin composition is preferably 45 parts by mass or more and 65 parts by mass or less with respect to 100 parts by mass of the resin composition, more preferably 50 parts by mass or more and 65 parts by mass or less, and even more preferably 50 parts by mass or more and 60 parts by mass or less.

In addition, resins other than liquid crystalline polyester may be included in the resin composition and examples of resins other than liquid crystalline polyester include thermoplastic resins other than liquid crystalline polyesters such as polypropylene, polyamide, polyesters other than liquid crystalline polyesters, polysulfone, polyphenylene sulfide, polyether ketone, polycarbonate, polyphenylene ether, and polyetherimide; and thermosetting resins such as phenol resin, epoxy resin, polyimide resin, and cyanate resin. The amount of the resin other than the liquid crystalline polyester is usually 0 to 20 parts by mass with respect to 100 parts by mass of the liquid crystalline polyester.

In addition, one type of liquid crystalline polyester resin may be used alone, or at least two types may be used in combination.

In a case where two types of liquid crystalline polyester resins are used in combination, these may be appropriately selected according to the ovenware to be molded, for example, in a case where liquid crystalline polyester resin (1) (also referred to as the first liquid crystalline polyester resin) and the liquid crystalline polyester resin (2) (also referred to as the second liquid crystalline polyester resin) for which the blending ratios of the repeating units (1) to (3) are different are represented by [the amount of liquid crystalline polyester (1)]/[the amount of liquid crystalline polyester (2)] (parts by mass/parts by mass), 90/10 to 10/90 is preferable, 80/20 to 20/80 is more preferable.

"The blending ratios of the repeating units (1) to (3) are different" means that the content rate of at least one of the repeating unit (1), the repeating unit (2), and the repeating unit (3) in the liquid crystalline polyester resin (1) is different to the content rate of the repeating unit (1), the repeating unit (2), and the repeating unit (3) in the liquid crystalline polyester resin (2). For example, in a case where the content rate of the repeating unit (1) in the liquid crystalline polyester resin (1) is different from the content rate of the liquid crystalline polyester (2), in the liquid crystalline polyester resin (1) and the liquid crystalline polyester resin (2), the blending ratios of the repeating units (1) to (3) are different. As one aspect of the present invention, the content rate of the repeating unit (2) of the liquid crystalline polyester resin (1) is preferably different from the content rate of the repeating unit (2) of the liquid crystalline polyester resin (2).

"The blending ratios of the repeating units (1) to (3) are different" includes a case where at least one of the repeating unit (1), the repeating unit (2), and the repeating unit (3) in the liquid crystalline polyester resin (1) is different from the repeating unit (1), the repeating unit (2), and the repeating unit (3) in the liquid crystalline polyester resin (2). The content rate of each of the repeating unit (1), the repeating unit (2), and the repeating unit (3) in the liquid crystalline polyester resin (1) in this case may be the same as the content rate of each of the repeating unit (1), the repeating unit (2), and the repeating unit (3) in the liquid crystalline polyester resin (2), and at least one of the repeating unit (1), the repeating unit (2), and the repeating unit (3) in the liquid crystalline polyester resin (1) may be different from the repeating unit (1), the repeating unit (2), and the repeating unit (3) in the liquid crystalline polyester resin (2). As one aspect of the present invention, the repeating unit (2) in the liquid crystalline polyester resin (1) is preferably different from the repeating unit (2) in the liquid crystalline polyester resin (2).

"The blending ratios of the repeating units (1) to (3) are different" includes a case where the repeating unit (1), the repeating unit (2), and the repeating unit (3) in the liquid crystalline polyester resin (1) are each the same as the repeating unit (1), the repeating unit (2), and the repeating unit (3) in the liquid crystalline polyester resin (2), and the content rate of each of the repeating units (1) to (3) are the same but at least one in the repeating units (1) to (3) of the liquid crystalline polyester resin (1) and the liquid crystalline polyester resin (2) is formed of at least two types of repeating units. At this time, when the repeating unit (1) in the liquid crystalline polyester resin (2) is formed of at least two types of repeating units, one type among these is the same as the repeating unit (1) in the liquid crystalline polyester resin (1). As one aspect of the present invention, the repeating unit (1), the repeating unit (2), and the repeating unit (3) in the liquid crystalline polyester resin (1) and the repeating unit (1) and the repeating unit (3) in the liquid crystalline polyester resin (2) are each formed from the same type of repeating unit, the repeating unit (2) in the liquid crystalline polyester resin (2) is preferably formed of the same repeating unit as the repeating unit (2) in the liquid crystalline polyester resin (1) and at least one other type of repeating unit.

"The blending ratios of the repeating units (1) to (3) are different" includes a case where the content rate of each of the repeating unit (1), the repeating unit (2), and the repeating unit (3) in the liquid crystalline polyester resin (1) and the content rate of the repeating unit (1), the repeating unit (2), and the repeating unit (3) in the liquid crystalline polyester resin (2) are the same, but at least one of the repeating units (1) to (3) in the liquid crystalline polyester resin (1) is formed of at least two types of repeating units and the repeating unit in the liquid crystalline polyester resin (2), which corresponds to a repeating unit formed of at least two types of repeating units in the liquid crystalline polyester resin (1), is formed of at least two types of repeating units. At this time, for example, a case is included in which, when the repeating unit (1) in the liquid crystalline polyester resin (1) is formed of at least two types of repeating units, the repeating unit (1) in the liquid crystalline polyester resin (2) is formed of one type in the repeating units included in the repeating unit (1) in the liquid crystalline polyester resin (1) and at least one other type of repeating unit, and the repeating units (1) to (3) in the liquid crystalline polyester resin (1) other than these are the same as the repeating units (1) to (3) in each of the liquid crystalline polyester resin (2). At this time, each of the content rate of at least two types of repeating units in the liquid crystalline polyester resin (1) and the liquid crystalline polyester resin (2) may be the same for the liquid crystalline polyester resin (1) and the liquid crystalline polyester resin (2) or may be different. As one aspect of the present invention, the repeating unit (1) and the repeating unit (3) in the liquid crystalline polyester resin (1) and the repeating unit (1) and the repeating unit (3) in the liquid crystalline polyester resin (2) are each formed of one type of repeating unit, and the repeating unit (2) in the liquid crystalline polyester resins (1) and (2) is formed of at least two types of repeating units, and the repeating unit (2) of the liquid crystalline polyester (2) is preferably formed of one type of the repeating units included in the repeating unit (2) of the liquid crystalline polyester (1) and at least one other type of repeating unit.

"The blending ratios of the repeating units (1) to (3) are different" includes a case where the repeating unit (1), the repeating unit (2), and the repeating unit (3) in the liquid crystalline polyester resin (1) are each the same as the repeating unit (1), the repeating unit (2), and the repeating unit (3) in the liquid crystalline polyester resin (2), the content rate of each of the repeating units (1) to (3) are also the same, but at least one in the repeating units (1) to (3) described above in the liquid crystalline polyester resin (1) are formed of at least two types of repeating units, and, among the repeating units (1) to (3) in the liquid crystalline polyester resin (2), the repeating units corresponding to the repeating units formed of at least two types of repeating units of the liquid crystalline polyester resin (1) are formed of at least two types of repeating units which are the same as the case of the liquid crystalline polyester resin (1), and the content rate of each of the repeating units formed of the at least two types of repeating units are different in the liquid crystalline polyester resin (1) and the liquid crystalline polyester resin (2). As one aspect of the present invention, the repeating unit (1) and the repeating unit (3) in the liquid crystalline polyester resin (1) and the repeating unit (1) and the repeating unit (3) in the liquid crystalline polyester resin (2) are each formed of the same type, the repeating unit (2) in the liquid crystalline polyester resin (1) and the repeating unit (2) in the liquid crystalline polyester resin (2) are formed of at least two types which are the same, the content rate of each of the repeating units (1) to (3) are also the same, but the content rate of each of the at least two types of repeating units of the repeating unit (2) in the liquid crystalline polyester resin (1) and the content rate of each of the at least two types of repeating units of the repeating unit (2) in the liquid crystalline polyester resin (2) are preferably different.

The liquid crystalline polyester is preferably produced by melt-polymerizing a raw material monomer corresponding to the repeating unit forming the liquid crystalline polyester and solid-phase polymerizing the obtained polymer (prepolymer). Due to this, it is possible to produce a high molecular weight liquid crystalline polyester having high heat resistance, strength, and rigidity with good operability. The melt polymerization may be performed in the presence of a catalyst. Examples of the catalyst include metal compounds such as magnesium acetate, stannous acetate, tetrabutyl titanate, lead acetate, sodium acetate, potassium acetate, and antimony trioxide, and nitrogen-containing heterocyclic compounds such as N,N-dimethylaminopyridine and N-methylimidazole, and nitrogen-containing heterocyclic compounds are preferable.

The flow initiation temperature of the liquid crystalline polyester is preferably 270°C or higher, more preferably 270°C or higher to 400°C or lower, even more preferably 280°C or higher to 380°C or lower, and particularly preferably 330°C or higher and 370°C or lower. When the flow initiation temperature of the liquid crystalline polyester is in the above range, the heat resistance, strength and rigidity are easily improved, high temperatures are not required for melting, heat degradation does not easily occur at the time of molding, the viscosity at the time of melting does not easily increase, and the fluidity does not easily decrease.

The flow initiation temperature is also referred to as a flow temperature or a fluid temperature and is a temperature at which, using a capillary rheometer, a viscosity of the liquid crystalline polyester is 4800 Pa·s (48000 poise) when the liquid crystalline polyester is melted and extruded from a nozzle with an inner diameter of 1 mm and a length of 10 mm while raising the temperature at a rate of 4°C/min under a load of 9.8 MPa (100 kgf/cm²), and is an indication of the molecular weight of the liquid crystalline polyester (refer to "Liquid Crystal Polymer - Synthesis - Molding - Application", edited by Naoyuki Koide, CMC Corporation, June 5, 1987, p. 95).

### (Talc Filler)

The talc filler used in the present invention is preferably a pulverized hydrous magnesium silicate. The crystalline structure of the hydrous magnesium silicate molecule is a pyrophilite type three-layer structure, and the talc filler is a stack of this structure. As the talc, tabular talc obtained by finely pulverizing crystals of hydrous magnesium silicate molecules to be approximately one unit layer is more preferable.

The average particle size of the talc filler is preferably 5 µm or more and 30 µm or less, and more preferably 10 µm or more and 25 µm or less. When the average particle size is the lower limit value or higher, flow marks are not easily generated and it is possible to obtain a good appearance and, when at the upper limit value or more, the mixing of talc having a large particle size is increased when the talc is sieved, which easily leads to appearance defects in which roughness is easily generated on the surface of the molded product.

Here, it is possible to measure the average particle size of the talc filler as follows. 0.1 g of powder of talc filler is added to 50 ml of a 0.2 mass% sodium hexametaphosphate aqueous solution to obtain a dispersion in which the powder is dispersed.

Next, with respect to the obtained dispersion, the particle size distribution is measured using a Master Sizer 2000 (laser diffraction scattering particle size distribution measuring device) manufactured by Malvern Instruments, and a cumulative particle size distribution curve based on volume is obtained. In the obtained cumulative particle size distribution curve, the value of the particle size viewed from the side of the fine particles at 50% accumulation is the 50% cumulative volume particle size D₅₀, and this value is used as the average particle size of the talc filler.

The talc filler may be used as it is without treatment, or the surface thereof may be treated with various known surfactants and used in order to improve the interfacial adhesion with the liquid crystalline polyester and the dispersibility in the liquid crystalline polyester. Examples of surfactants include a silane coupling agent, a titanium coupling agent, a higher fatty acid, a higher fatty acid ester, a higher fatty acid amide, higher fatty acid salts, and the like.

In the present invention, the amount of the talc filler is 55 parts by mass or more and 100 parts by mass or less with respect to 100 parts by mass of the liquid crystalline polyester resin, and preferably 60 parts by mass or more and 90 parts by mass or less, and more preferably 60 parts by mass or more and 80 parts by mass or less. When the amount of the talc filler exceeds 100 parts by mass, the specific gravity of the resin composition becomes high and the strength of the obtained ovenware tends to decrease.

### (Titanium Oxide Filler)

In the present invention, the resin composition preferably contains a titanium oxide filler. As long as the titanium oxide filler has a titanium oxide as a main component, unintentionally contained impurities may be included. As the titanium oxide filler used in the present invention, it is possible to use a commercially available titanium oxide filler for filling a resin as it is. The term "main component" as used here means being included at 80% or more. The titanium oxide filler preferably contains 90% or more of titanium oxide.

The crystal form of the titanium oxide filler is not particularly limited, and may be rutile type, anatase type, or a mixture of both. In the present invention, it is preferable to employ a rutile type titanium oxide filler having a larger refractive index than an anatase type titanium oxide filler.

In addition, a titanium oxide filler subjected to a surface treatment may be used.

For example, performing a surface treatment with an inorganic metal oxide makes it possible to improve characteristics such as dispersibility. As the inorganic metal oxide, for example, it is preferable to use aluminum oxide (that is, alumina).

In the present invention, if aggregation or the like does not occur in the producing steps and there is no problem in terms of handling, titanium oxide which is not surface-treated is preferably used in view of the heat resistance and strength.

The average particle size of the titanium oxide filler is not particularly limited and is able to be selected appropriately.

The average particle size of the titanium oxide filler is preferably 0.10 µm or more and 1 µm or less, and more preferably 0.15 µm or more and 0.25 µm or less.

In the present invention, it is possible to determine the average particle size of the titanium oxide filler as follows, with the longest dimension of the particles related to the titanium oxide as the particle size.

In a case where the titanium oxide filler is sufficiently aggregated or the like with the solvent for measuring the average particle size, the appearance is photographed with a scanning electron microscope (SEM). Furthermore, a distribution curve is obtained by plotting the amount of particles (%) in each particle size section of the primary particle size from an SEM photograph using an image analyzer (for example, "LUZEX IIU" manufactured by Nireco Corporation). From the distribution curve, it is possible to obtain the volume average particle size (average particle size of the titanium oxide filler) by determining the value of the cumulative degree of 50%. On the other hand, in a case where aggregation or the like does not sufficiently occur in the solvent for measuring the average particle size of the titanium oxide filler, it is possible to determine the average particle size of the titanium oxide filler by laser diffraction or the like.

The amount of the titanium oxide filler (also referred to as the filling amount of the titanium oxide filler) is preferably 1 part by mass or more and 20 parts by mass or less with respect to 100 parts by mass of the liquid crystalline polyester resin, and more preferably 1 part by mass or more and 15 parts by mass or less.

In a case of using a mixture of a plurality of types of fillers as the titanium oxide, the total amount thereof may be in the range of such blending amount.

In the above range, the appearance of the surface of the ovenware is improved.

### (Pigment)

In the present invention, the resin composition according to the ovenware preferably contains a pigment. The pigment contained in the resin composition may be appropriately selected according to the design of the ovenware and examples of the pigment include inorganic fillers such as alumina, iron oxide, cobalt oxide, chromium oxide, manganese oxide, and ultramarine blue, and carbon black, and the like. In particular, in the present invention, carbon black is preferably contained. The titanium oxide filler and the talc filler are not included in the pigment of the present invention. Here, one type of the pigment may be used alone, or two or more types thereof may be used at the same time.

In the present invention, the blending amount of the carbon black is preferably 1 part by mass or more and 10 parts by mass or less with respect to 100 parts by mass of the liquid crystalline polyester resin, and more preferably 1 part by mass or more and 5 parts by mass or less.

### <Method of Producing an Ovenware>

It is possible to manufacture the ovenware of the present invention by, for example, an injection molding method.

It is possible to suitably use the ovenware of the present invention even at a high temperature of 250°C or higher.

### <Resin Composition for Molding an Ovenware>

A second aspect of the present invention is a resin composition for molding an ovenware.

The description of the resin composition for molding an ovenware of the present invention is the same as the resin composition described as the resin composition to be used for molding an ovenware of the first aspect of the present invention.

The method for producing the resin composition for molding an ovenware of the present invention includes mixing and kneading the liquid crystalline polyester resin for molding an ovenware of the first aspect of the present invention, a talc filler, titanium oxide, and a pigment as desired at a predetermined blending ratio.

Another aspect of the ovenware of the present invention is
an ovenware which has a container portion, and a handle portion connected to the container portion, in which the ovenware is a molded article of a resin composition containing a liquid crystalline polyester resin and a talc filler, a deflection temperature of the resin composition under load of the resin composition is 270°C or higher, an internal volume of the ovenware is 500 mL or more and 6 L or less, a thickness of the container portion is 0.3 mm or more and 5 mm or less, and the liquid crystalline polyester resin has at least the repeating unit (1), the repeating unit (21), and the repeating unit (31).

The flow initiation temperature of the liquid crystalline polyester resin is 330°C or higher and 370°C or lower.

In the liquid crystalline polyester resin, the content rate of the repeating unit (1) is 55 mol% or more and 65 mol% or less when the total of the repeating unit (1), the repeating unit (21) and the repeating unit (31) is 100 mol%, the content rate of the repeating unit (21) is 17.5 mol% or more and 25 mol% or less when the total of the repeating unit (1), the repeating unit (21), and the repeating unit (31) is 100 mol%, and the content rate of the repeating unit (31) is 17.5 mol% or more and 27.5 mol% or less when the total of the repeating unit (1), the repeating unit (21), and the repeating unit (31) is 100 mol%.

Another aspect of the ovenware of the present invention is
an ovenware which has a container portion, and a handle portion connected to the container portion, in which the ovenware is a molded article of a resin composition containing a liquid crystalline polyester resin and a talc filler, a deflection temperature under load of the resin composition is 270°C or higher, an internal volume of the ovenware is 500 mL or more and 6 L or less, a thickness of the container portion is 0.3 mm or more and 5 mm or less, the liquid crystalline polyester resin has at least the repeating unit (1), the repeating unit (2), and the repeating unit (3), the repeating unit (1) is a repeating unit in which Ar¹ is a 1,4-phenylene group (for example, a repeating unit derived from 4-hydroxybenzoic acid), the repeating unit (2) is at least one of a repeating unit in which Ar² is a 1,4-phenylene group (for example, a repeating unit derived from terephthalic acid) and a repeating unit in which Ar² is a 1,3-phenylene group (for example, a repeating unit derived from isophthalic acid), and the repeating unit (3) is a repeating unit in which Ar² is 4,4'-biphenylylene group (for example, a repeating unit derived from 4,4'-dihydroxybiphenyl, 4-amino-4'-hydroxybiphenyl, or 4,4'-diaminobiphenyl).

In the liquid crystalline polyester resin, the content rate of the repeating unit (1) is 55 mol% or more and 65 mol% or less when the total of the repeating unit (1), the repeating unit (2), and the repeating unit (3) is 100 mol%, the content rate of the repeating unit (2) is 17.5 mol% or more and 25 mol% or less when the total of the repeating unit (1), the repeating unit (2), and the repeating unit (3) is 100 mol%, and the content rate of the repeating unit (3) is 17.5 mol% or more and 27.5 mol% or less when the total of the repeating unit (1), the repeating unit (2), and the repeating unit (3) is 100 mol%.

The flow initiation temperature of the liquid crystalline polyester resin is 330°C or higher and 370°C or lower.

Another aspect of the ovenware of the present invention is an ovenware which has a container portion; and a handle portion connected to the container portion, in which the ovenware is a molded article of a resin composition containing a first liquid crystalline polyester resin, a second liquid crystalline polyester resin, and a talc filler, a deflection temperature under load of the resin composition is 270°C or higher, an internal volume of the ovenware is 500 mL or more and 6 L or less, a thickness of the container portion is 0.3 mm or more and 5 mm or less, the first liquid crystalline polyester resin and the second liquid crystalline polyester resin each have at least the repeating unit (1), the repeating unit (2), and the repeating unit (3), and the content rate of at least one of the repeating unit (1), the repeating unit (2), and the repeating unit (3) in the first liquid crystalline polyester resin is different to the content rate of the repeating unit (1), the repeating unit (2), and the repeating unit (3) in the second liquid crystalline polyester resin.

In the first liquid crystalline polyester resin and the second liquid crystalline polyester resin, the repeating unit (1) is a repeating unit in which Ar¹ is a 1,4-phenylene group (for example, a repeating unit derived from 4-hydroxybenzoic acid), the repeating unit (2) is at least one of a repeating unit in which Ar² is a 1,4-phenylene group (for example, a repeating unit derived from terephthalic acid) and a repeating unit which is a 1,3-phenylene group (for example, a repeating unit derived from isophthalic acid), and the repeating unit (3) is a repeating unit in which Ar² is 4,4'-biphenylylene group (for example, a repeating unit derived from 4,4'-dihydroxybiphenyl, 4-amino-4'-hydroxybiphenyl, or 4,4'-diaminobiphenyl).

The flow initiation temperature of the second liquid crystalline polyester is 330°C or higher and 370°C or lower.

In the second liquid crystalline polyester resin, the content rate of the repeating unit (1) is 55 mol% or more and 65 mol% or more when the total of the repeating unit (1), the repeating unit (2), and the repeating unit (3) is 100 mol%, the content rate of the repeating unit (2) is 17.5 mol% or more and 27.5 mol% or less when the total of the repeating unit (1), the repeating unit (2), and the repeating unit (3) is 100 mol%, and the content rate of the repeating unit (3) is 17.5 mol% or more and 27.5 mol% or less when the total of the repeating unit (1), the repeating unit (2), and the repeating unit (3) is 100 mol%.

In the second liquid crystalline polyester resin, the content rate of the repeating unit (1) is 55 mol% or more and 65 mol% or less when the total of the repeating unit (1), the repeating unit (2), and the repeating unit (3) is 100 mol%, the content rate of the repeating unit (2) is 17.5 mol% or more and 25 mol% or less when the total of the repeating unit (1), the repeating unit (2), and the repeating unit (3) is 100 mol%, and the content rate of the repeating unit (3) is 17.5 mol% or more and 27.5 mol% or less when the total of the repeating unit (1), the repeating unit (2), and the repeating unit (3) is 100 mol%.

The content rate of the repeating unit (2) in the first liquid crystalline polyester resin is different from the content rate of the repeating unit (2) in the second liquid crystalline polyester resin.

### [Examples]

A more specific description will be given below of the present invention with reference to Examples, but the present invention is not limited to the following Examples.

### [Method for Producing Liquid Crystalline Polyester 1]

Into a reactor provided with a stirrer, a torque meter, a nitrogen gas inlet tube, a thermometer, and a reflux condenser, 994.5 g (7.2 mol) of parahydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1347.6 g (13.2 mol) of acetic acid anhydride were charged, 0.2 g of 1-methylimidazole was added thereto, and the interior of the reactor was thoroughly substituted with nitrogen gas.

Thereafter, the temperature was raised from room temperature to 150°C over 30 minutes under a nitrogen gas flow, and the temperature was maintained and reflux carried out for one hour.

Subsequently, the temperature was raised from 150°C to 320°C over 2 hours and 50 minutes while by-product acetic acid and unreacted acetic anhydride were distilled off, and the reaction was finished at the time when an increase in torque was observed to obtain a prepolymer.

The obtained prepolymer was cooled to room temperature and pulverized by a coarse pulverizer. The obtained prepolymer powder was heated from room temperature to 250°C over one hour in a nitrogen atmosphere, heated from 250°C to 285°C over 5 hours, and held at 285°C for 3 hours to perform solid phase polymerization. The flow initiation temperature of the obtained liquid crystalline polyester 1 was 327°C.

### [Method for Producing Liquid crystalline polyester 2]

Into a reactor provided with a stirrer, a torque meter, a nitrogen gas inlet tube, a thermometer, and a reflux condenser, 994.5 g (7.2 mol) of parahydroxybenzoic acid, 446.9 g (2.4 mol) of 4,4'-dihydroxybiphenyl, 358.8 g (2.2 mol) of terephthalic acid, 39.9 g (0.2 mol) of isophthalic acid, and 1347.6 g (13.2 mol) of acetic anhydride were charged, 0.2 g of 1-methylimidazole was added thereto, and the interior of the reactor was thoroughly substituted with nitrogen gas.

Thereafter, the temperature was raised from room temperature to 150°C over 30 minutes under a nitrogen gas flow, and the temperature was maintained and reflux carried out for one hour.

Subsequently, while by-product acetic acid and unreacted acetic anhydride were distilled off, the temperature was raised from 150°C to 320°C over 2 hours and 50 minutes, and the reaction was finished at the time when an increase in torque was observed to obtain a prepolymer.

The obtained prepolymer was cooled to room temperature and pulverized by a coarse pulverizer. The obtained prepolymer powder was heated from room temperature to 250°C over one hour in a nitrogen atmosphere, heated from 250°C to 305°C over 5 hours, and held at 305°C for 3 hours to perform solid phase polymerization. The flow initiation temperature of the obtained liquid crystalline polyester 2 was 357°C.

### [Producing of Liquid Crystalline Polyester Resin Composition]

Talc, titanium oxide, and carbon black were blended with the liquid crystalline polyesters 1 to 2 obtained above in the blending ratios shown in Table 1 below.

Thereafter, a liquid crystalline polyester resin composition was obtained using a twin-screw extruder (PCM-30, manufactured by Ikegai Tekko Co., Ltd.).

### [Producing of Ovenware]

The obtained liquid crystalline polyester resin composition was formed at 330°C to 340°C using an injection molding machine to obtain an ovenware.

**[Table 1]**

| | Liquid crysta lline polyester | Talc | Titanium oxide | Carbon black | Ovenware shape |
|---|---|---|---|---|---|
| Comparative Example 1 | LCP-1 [100] | Talc A [67] | Titanium oxide 1 [2] | CB [2] | F |
| Example 1 | LCP-1/LCP-2 [75/25] | Talc A [67] | Titanium oxide 1 [2] | CB [2] | F |
| Example 2 | LCP-2 [100] | Talc A [67] | Titanium oxide 1 [2] | CB [2] | F |
| Reference Example 1 | LCP-1 [100] | Talc A [67] | Titanium oxide 1 [2] | CB [2] | G |

In Table 1, [] indicates the blending ratio (parts by mass). In Table 1, the symbols have the following meanings.
- LCP 1 and 2: liquid crystalline polyester 1 and 2
- Talc A: "X-50" manufactured by Nippon Talc Co., Ltd., average particle size 20 µm
- Titanium oxide 1: "CR-60" manufactured by Ishihara Sangyo Kaisha, Ltd., average particle size 0.21 µm
- CB: Carbon black "# 45 LB" manufactured by Mitsubishi Chemical Corporation
- F: Ovenware shape, capacity 3.6 L, thickness 2 mm, with handles
- G: Ovenware shape, capacity 200 mL, thickness 2 mm, with handles

### [Evaluation]

The deflection temperature under load of the obtained resin composition, the bending strength, and the strength of the handle portion of the ovenware were evaluated.

### [Deflection temperature Under Load]

The deflection temperature under load (DTUL, unit "°C") was measured in accordance with ASTM D648 with a load of 1.82 MPa. For a test piece, a test piece having a shape of 6.4 mm (width) × 127 mm (length) × 12.7 mm (height) was molded by an injection molding method and used for the measurement. The results are shown in Table 2 as "DTUL (°C)".

### [Bending Strength]

The bending strength was measured in accordance with ASTM D 790. A test piece having a shape of 12.7 mm (width) × 127 mm (length) × 6.4 mm (height) was molded by an injection molding method and used for the measurement. A bending test was carried out in a thermostatic chamber at 250°C with a distance between fulcrums of 10 mm and a test speed of 2 mm/min. The results are listed in Table 2 as "bending strength (250°C) (MPa)".

### [Strength of Handle Portion]

An ovenware into which a weight corresponding to the weight of water in an amount of about 90% of the volume of the ovenware was placed was heated in an oven heated to 250°C for one hour and then, when held by a handle portion and taken out by hand, an ovenware with a bent and deformed handle was B, and an ovenware where the handle did not bend was A. The results are shown in Table 2.

**[Table 2]**

| | DTUL (°C) | Bending strength (250°C) (MPa) | Strength of handle portion |
|---|---|---|---|
| Comparative Example 1 | 258 | 19 | B |
| Example 1 | 270 | 22 | A |
| Example 2 | 305 | 28 | A |
| Reference Example 1 | 258 | Data not acquired | A |

As shown in Table 2, the ovenware of Examples 1 and 2 had excellent strength.

### Industrial Applicability

According to the present invention, it is possible to provide an ovenware, a method of producing the ovenware, and a resin composition for molding the ovenware.

### Reference Signs List

- 1: ovenware
- 2: handle portion
- 10: container portion
- 11: bottom portion
- 12: side wall
- 20: lid portion
- S: space

## Claims

1. An ovenware comprising:
a container portion; and
a handle portion connected to the container portion,
wherein the ovenware is a molded article of a resin composition containing a liquid crystalline polyester resin and a talc filler,
a deflection temperature under load of the resin composition is 270°C or higher,
an internal volume of the ovenware is 500 mL or more and 6 L or less, and
a thickness of the container portion is 0.3 mm or more and 5 mm or less.

2. The ovenware according to claim 1,
wherein an amount of the talc filler is 55 parts by mass or more and 100 parts by mass or less with respect to 100 parts by mass of the liquid crystalline polyester resin.

3. The ovenware according to claim 1 or 2,
wherein an average particle size of the talc filler is 5 µm or more and 30 µm or less.

4. The ovenware according to any one of claims 1 to 3,
wherein the resin composition contains a titanium oxide filler, and a filling amount of the titanium oxide filler is 1 part by mass or more and 15 parts by mass or less with respect to 100 parts by mass of the liquid crystalline polyester resin.

5. The ovenware according to any one of claims 1 to 4,
wherein the resin composition is a liquid crystalline polyester resin composition with a bending strength of 20 MPa or more as measured at 250°C in accordance with ASTM D790.

6. A method for producing the ovenware according to any one of claims 1 to 5,
wherein producing is carried out by an injection molding method.

7. A resin composition for molding an ovenware comprising:
a liquid crystalline polyester resin;
a talc filler; and
a titanium oxide filler.
